# EUROPEAN PATENT APPLICATION

(11) **EP 2 194 598 A1**
(43) Date of publication of application: **09.06.2010**
(21) Application number: 09170724.0
(22) Date of filing: 18.09.2009
(51) Int. Cl.: H01M 8/04

(54) **Fuel Cell System and Method of Operating a Fuel Cell Stack**

(30) Priority: 03.12.2008 US 119670 P; 13.08.2009 US 541109
(71) Applicant: Samsung SDI Co., Ltd., Gyeonggi-do (KR)
(72) Inventor: Park, Jun-Young, Yongin-si Gyeonggi-do (KR); Suh, Jun-Won, Yongin-si Gyeonggi-do (KR); Lee, Chi-Seung, Yongin-si Gyeonggi-do (KR); An, Seong-Jin, Yongin-si Gyeonggi-do (KR); Lee, Jin-Hwa, Yongin-si Gyeonggi-do (KR)
(74) Representative: Walaski, Jan Filip

(57) **Abstract**

A method of operating a fuel cell system according to the present invention includes supplying a small amount of an oxidizer, which is less than a normal amount of the oxidizer, to a fuel cell stack while continuously supplying fuel to the fuel cell stack in driving a fuel cell system, supplying an excessive amount of the oxidizer, which is more than the normal amount, to the fuel cell stack, and supplying the normal amount of the oxidizer to the fuel cell stack, which is an amount of the oxidizer supplied in a normal driving state.

## Description

The present invention relates to a fuel cell system and a method of operating a fuel cell stack. More particularly, the present invention relates to a fuel cell system for reducing a cathode catalyst and easily removing reactants or non-reactants created inside a fuel cell.

A fuel cell is a device that electrochemically generates electric power using fuel (hydrogen or reformed gas) and an oxidizer (oxygen or air). That is, the fuel cell receives fuel (hydrogen or reformed gas) and an oxidizer (oxygen or air) constantly from an external device, and transforms the fuel and the oxidizer directly to electrical energy through an electrochemical reaction.

Pure oxygen or air that contains a large amount of oxygen is used as the oxidizer of the fuel cell, and pure hydrogen or a fuel containing a large amount of hydrogen is used as the fuel. The fuel containing a large amount of hydrogen may be a fuel that is produced by reforming a carbonized hydrogen fuel such as LNG, LPG, and CH₃OH.

Hereinafter, a fuel cell system according to the related art will be described based on a polymer electrolyte membrane fuel cell (PEMFC) for better comprehension and ease of description. The PEMFC has high output density and high energy transformation efficiency and is operable at a low temperature, for example below 80°C. Also, the PEMFC is down-sizable, closeable, and scalable. Therefore, the PEMFC can be generally used as a power source in many fields, for example electromobiles, home power generators, mobile communication equipment, military equipment, and medical equipment.

Such a PEMFC includes a reformer for generating a reformed gas containing a large amount of hydrogen from fuel and a fuel cell stack for generating electric power from the reformed gas.

The fuel cell stack receives oxygen with the reformed gas and generates electric power through the reaction of the oxygen and hydrogen.

The PEMFC is driven at a high driving voltage in order to drive the PEMFC with high efficiency by reducing the use of fuel. However, the high voltage driving of PEMFC causes a cathode in the fuel cell stack to be oxidized, thereby deteriorating the activation of a cathode catalyst. That is, a carbon-supported platinum catalyst, which is platinum particles supported in carbon particles, is generally used in the cathode of the fuel cell stack. The carbon-supported platinum catalyst represents a cathode catalyst. When an oxidizer is supplied to a fuel cell stack, an oxide film is formed on the cathode catalyst. The oxide film deteriorates the activation of a catalyst, and the oxidizer causes the carbon particles to be oxidized while driving. Also, non-reactants are generated during reaction. If the non-reactants are not removed, the non-reactants block a channel. As a result, a flooding problem may arise. The flooding problem is the major cause of a decrease in the life-span of a fuel cell stack.

In order to overcome such a problem, a method of removing non-reactants or poisoned materials by supplying an excessive amount of fuel to an anode with high pressure, and a method of removing water or condensed moisture by injecting an excessive amount of air to a cathode, were introduced. However, such methods could not significantly decrease the deterioration. The introduced methods also disadvantageously lower the efficiency of a fuel cell system because the introduced methods cause the fuel cell system to consume fuel and to increase output unnecessarily.

A method of reducing a catalyst by forming a reduction atmosphere by temporarily stopping the supply of an oxidizer to a cathode was introduced. However, this method excessively decreases the amount of air. That is, it causes an inverse voltage to be applied to a fuel cell stack. Also, this method could not remove non-reactants such as moisture and poisoned materials or reactants. If the inverse voltage is applied at the fuel cell stack, the deterioration is further accelerated. Therefore, the shortening of life-span of the fuel cell stack is increased.

Also, this method could not significantly prevent the deterioration of the fuel cell stack over the long term because a catalyst is deteriorated by corrosion of carbon particles when an oxidizer is re-supplied after completely stopping the supply of the oxidizer.

The above information disclosed in this section is only for enhancement of understanding of the background of the invention and therefore it may contain information that does not form part of the prior art.

The present invention has been made in an effort to provide a fuel cell system and a driving method thereof having advantages of improving a life-span of the fuel cell system by suppressing deterioration of a fuel cell stack and easily removing non-reactants at the same time.

An exemplary embodiment of the present invention provides a method of driving a fuel cell system that includes supplying a small amount of an oxidizer, which is less than a normal amount of the oxidizer, to a fuel cell stack while continuously supplying fuel to the fuel cell stack in driving a fuel cell system, dropping a voltage of the fuel cell stack, supplying an excessive amount of the oxidizer, which is more than the normal amount, to the fuel cell stack, and supplying the normal amount of the oxidizer to the fuel cell stack, which is an amount of the oxidizer supplied in a normal driving state.

In the supplying a small amount of an oxidizer, the small amount of the oxidizer supplied to the fuel cell stack may be about 75% to 85% of the normal amount. In the dropping a voltage, the voltage of the fuel cell stack may be dropped to a reduction voltage that forms a reduction atmosphere inside a cathode.

The reduction voltage may be about 0.5V to 0.01V. In the supplying an excessive amount of the oxidizer, the excessive amount of the oxidizer supplied to the fuel cell stack may be about 120% to 150% of the normal amount of the oxidizer.

In the supplying an excessive amount of the oxidizer, a time of supplying the excessive amount of the oxidizer may be about 2 seconds to 5 seconds. The fuel cell system may further include a control valve for controlling supply of the oxidizer.

In the supplying an excessive amount of the oxidizer, non-reactants and reactants remaining in the fuel cell stack may be removed.

Another exemplary embodiment of the present invention provides a fuel cell system that includes a membrane electrode assembly, a fuel cell stack, a fuel supply unit, an oxidizer supply unit, and a controller. The membrane electrode assembly includes an electrolyte membrane, a cathode disposed at one side of the electrolyte membrane, and an anode disposed at the other side. The fuel cell stack includes a plurality of electric power generators having separators disposed at both sides of the membrane electrode assembly. The fuel supply unit supplies fuel to the fuel cell stack, and the oxidizer supply unit supplies an oxidizer to the fuel cell stack. The controller controls the constituent elements of the fuel cell system to sequentially perform decreasing an amount of the oxidizer supplied to the fuel cell stack, dropping a voltage of the fuel cell stack, increasing an amount of the oxidizer supplied to the fuel cell stack to more than an normal amount of the oxidizer, and supplying the normal amount of the oxidizer to the fuel cell stack, which is an amount of the oxidizer supplied in a normal driving state.

The controller may decrease an amount of the oxidizer supplied to the fuel cell stack to about 75% to 85% of the normal amount. The controller may drop a voltage of the fuel cell stack to a reduction voltage that forms a reduction atmosphere inside the cathode. The reduction voltage may be about 0V to 0.5V. The controller may increase an amount of the oxidizer supplied to the fuel cell stack to about 120% to 150% of the normal amount.

The fuel cell system may further include a control valve for controlling an amount of the oxidizer supplied to the fuel cell stack.

According to the present invention, the deterioration can be prevented by reducing an oxidized cathode catalyst by forming a reduction atmosphere through decreasing the supply of the oxidizer. Also, reactants and non-reactants remaining inside the fuel cell stack can be easily removed by increasing the supply of the oxidizer.
FIG. 1 is a schematic diagram illustrating a fuel cell system according to an exemplary embodiment of the present invention.
FIG. 2 is an exploded perspective view of a fuel cell stack shown in FIG. 1.
FIG. 3 is a flowchart illustrating a method of driving a fuel cell system according to the first exemplary embodiment of the present invention.
FIG. 4 is a graph comparing performance of a method of driving a fuel cell system according to Example 1 of the present invention with a driving method of Comparative Example 1.
FIG. 5 is a graph showing the life-span of a fuel cell stack according to a method of driving a fuel cell system according to an exemplary embodiment of the present invention.

The present invention will be described more fully hereinafter with reference to the accompanying drawings, in which exemplary embodiments of the invention are shown.

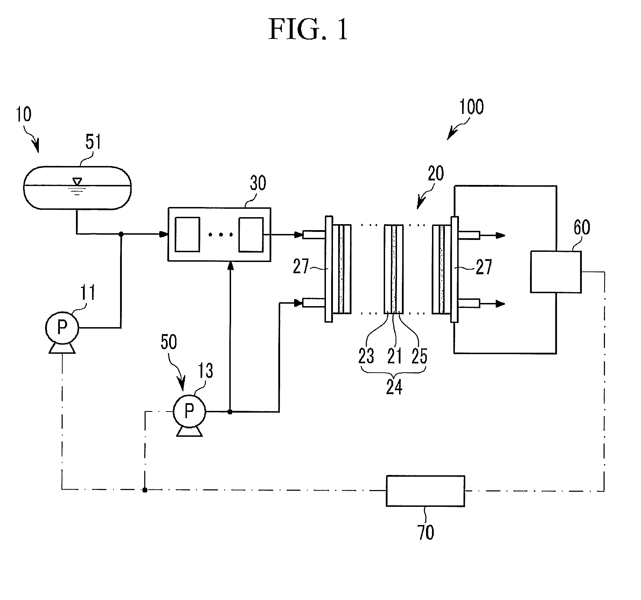

FIG. 1 is a schematic diagram illustrating a fuel cell system according to an exemplary embodiment of the present invention.

Referring to the drawings, the fuel cell system 100 according to the present exemplary embodiment may employ a polymer electrode membrane fuel cell (PEMFC) that generates hydrogen by reforming fuel and generating electrical energy by electromechanically reacting hydrogen and oxygen.

However, the present invention is not limited thereto. The fuel cell system according to the present exemplary embodiment may include a liquid fuel or gaseous fuel containing hydrogen, for example methanol, ethanol, LPG, LNG, gasoline, and butane gas. In this case, a fuel cell stack 20 according to the present embodiment may be formed in a structure of a direct oxidation fuel cell that generates electrical energy by directly reacting oxygen with liquid fuel or gaseous fuel using a power generator.

Fuel used for the fuel cell system 100 may be liquid or gaseous carbon hydrogen fuel, for example methanol, ethanol, natural gas, and LPG.

The fuel cell system 100 may use oxygen gas stored in a storing unit or air as an oxidizer that reacts with hydrogen.

The fuel cell system 100 according to the present exemplary embodiment includes a reformer 30 for generating a reformed gas using fuel, the fuel cell stack 20 connected to the reformer 30 for generating electric power using the reformed gas and an oxidizer, a fuel supply unit 10 for supplying fuel to the reformer 30, and an oxidizer supply unit 50 for supplying the oxidizer to the fuel cell stack 20 to generate electric power.

As described above, the reformer 30 reforms liquid fuel to hydrogen gas through a reforming reaction. The fuel cell stack 20 uses the reformed hydrogen gas to generate electric power. Also, the reformer 30 decreases the concentration of carbon monoxide contained in the hydrogen gas.

In general, the reformer 30 includes a reforming unit for generating hydrogen gas by reforming liquid fuel, and a carbon monoxide decreasing unit for decreasing the concentration of the carbon monoxide in the hydrogen gas. The reforming unit converts the fuel into a reformed gas containing a large amount of hydrogen through catalytic reaction such as steam reforming, partial oxidation, and exothermic reaction.

The monoxide carbon decreasing unit decreases the concentration of the monoxide carbon contained in the reformed gas using catalytic reaction such as water-gas shift reaction and selective oxidation, or hydrogen purification using a membrane.

The fuel supply unit 10 is connected to the reformer 30. The fuel supply unit 10 includes a fuel tank 51 for storing liquid fuel and a fuel pump 11 connected to the fuel tank 51. The fuel pump 11 has a function of discharging the liquid fuel stored in the fuel tank 51 from the inside of the fuel tank 51 by a predetermined pumping power.

The oxidizer supply unit 50 is connected to the fuel cell stack 20 and includes an oxidizer pump 13 that takes in external air with a predetermined pumping power and supplies the external air to the fuel cell stack 20. The oxidizer pump 13 may communicate with a controller 70, which controls the oxidizer pump 13 to thereby control the supply of oxidizer to the fuel cell stack.

In an alternative embodiment, the fuel cell system may further include an oxidizer control valve between the fuel cell stack 20 and the oxidizer supply unit 50. The oxidizer control valve may communicate with the controller 70, which controls the valve to thereby control the supply of the oxidizer.

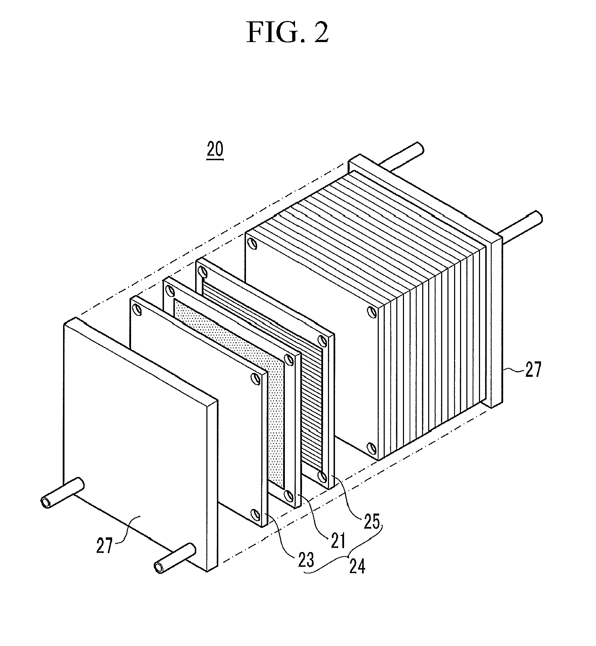

FIG. 2 is an exploded perspective view of a fuel cell stack shown in FIG. 1. Referring to FIG. 1 and FIG. 2, the fuel cell stack 20 of the fuel cell system 100 includes a plurality of electric power generators 24 for generating electrical energy by inducing an oxidation-reduction reaction of the reformed fuel and the oxidizer through the reformer 30.

Each of the electric power generators 24 is a unit cell that generates electric power, and includes a membrane electrode assembly MEA 21 for oxidizing or reducing oxygen in the fuel and the oxidizer and separators 23 and 25 for supplying the fuel and the oxidizer to the membrane electrode assembly 21. The separator may be referred to as a bipolar plate.

Each of the electric power generators 24 includes the membrane electrode assembly 21 and separators 23 and 25 disposed at both sides of the membrane electrode assembly 21. The membrane electrode assembly 21 includes an electrolyte membrane disposed at a center thereof, a cathode disposed at one side of the electrolyte membrane, and an anode disposed at the other side of the electrolyte membrane.

In the fuel cell system 100 according to the present embodiment, the fuel cell stack 20 is formed by sequentially disposing a plurality of electric power generators 24. Here, a separator disposed at the outer most side of the fuel cell stack 20 is referred to as an end plate 27.

A load 60 that consumes the electrical energy generated at the fuel cell stack 20 is electrically connected to the fuel cell stack 20. The load 60 may be various electric devices such as a motor of a vehicle, an inverter for transforming direct current DC to alternating current AC, and domestic electric heating equipment.

Meanwhile, the fuel cell system 100 further includes a controller 70. The controller 70 is connected to the fuel supply unit 10, the oxidizer supply unit 50, the oxidizer control valve, and the load 60, and controls overall operations of the fuel cell system 100.

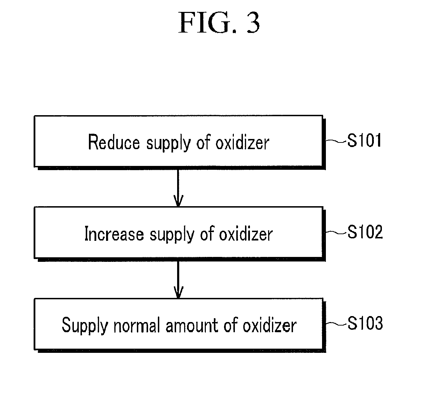

FIG. 3 is a flowchart illustrating a method of driving a fuel cell system according to the first exemplary embodiment of the present invention.

Referring to FIG. 3, the method of driving a fuel cell system according to the present exemplary embodiment includes supplying a small amount of an oxidizer, which is less than a normal amount of the oxidizer, to a fuel cell stack while continuously supplying fuel to the fuel cell stack in driving a fuel cell system at step S101, which results in a drop in a voltage of the fuel cell stack, supplying an excessive amount of the oxidizer, which is more than the normal amount, to the fuel cell stack, at step S102, and supplying the normal amount of the oxidizer to the fuel cell stack, which is an amount of the oxidizer supplied in an normal driving state, at step S103.

In the supplying a small amount of an oxidizer at step S101, a small amount of oxidizer is supplied to the fuel cell stack by decreasing a supply amount of the oxidizer while continuously supplying fuel in driving of the fuel cell stack. The small amount of oxidizer is about 75% to 85% of the normal amount, which is an amount of the oxidizer supplied in a normal driving state.

If the small amount is less than about 75% of the normal amount, an inverse voltage is applied to the fuel cell stack. Therefore, the fuel cell system may be deteriorated, or carbon particles may be corroded when the normal amount of oxidizer is supplied again. If the small amount of oxidizer is more than the normal amount, it may take a longer time to drop a voltage of the fuel cell stack 20, a reduction atmosphere cannot be formed, and the catalyst may not be stably decreased.

The voltage of the fuel cell stack 20 may drop to around 0V with the supply of the oxidizer decreased. For example, the voltage of the fuel cell stack 20 drops to a reduction voltage that forms a reduction atmosphere inside a cathode. Here, the reduction voltage may be about 0V to 0.5V.

If the inside voltage of the fuel cell stack 20 decreases to the reduction voltage with the supply of oxidizer decreased, an oxidized catalyst may be reduced in several seconds because the reduction atmosphere is formed in the cathode.

The oxidized platinum Pt catalyst of a cathode disadvantageously deteriorates activation while driving the fuel cell system. Therefore, if the reduction atmosphere is formed in the cathode according to the present embodiment, catalytic poison can be easily removed by reducing the Pt catalyst.

If the voltage is dropped after decreasing a supply amount of air without stopping the supply of air according to the present exemplary embodiment, it is possible to prevent the inverse voltage from being applied to the fuel cell stack 20.

In the supplying an excessive amount of the oxidizer at step S102, the oxidizer is re-supplied to the fuel cell stack 20 after dropping the voltage. When the oxidizer is re-supplied, non-reactants and reactants are removed by supplying the excessive amount of the oxidizer to the fuel cell stack 20. Here, the excessive amount is more than the normal amount. The excessive amount of the oxidizer is about 120% to 150% of the normal amount, and a time of supplying the oxidizer is about 2 to 5 seconds.

If the excess amount of the oxidizer is less than 120% of the normal amount, reacted products may not be properly removed. If the excess amount of the oxidizer is more than about 150% of the normal amount, the catalyst may be deteriorated due to abrupt oxidization.

If the excess amount of the oxidizer is supplied after decreasing the supply of the oxidizer, water and impurities, which are generated inside the fuel cell stack by the oxidizer, can be easily removed by the excessive amount of the oxidizer supplied with high pressure. Since the supply of the oxidizer is not stopped, it is possible to prevent carbon particles from oxidization, which may occur when the oxidizer is re-supplied after stopping the supply of the oxidizer.

In the supplying the normal amount of the oxidizer to the fuel cell stack 20 at step S103, the fuel cell stack 20 is driven in a normal driving state again by supplying the normal amount of the oxidizer to the fuel cell stack 20 after removing the impurities by increasing the supply of the oxidizer. The electrical energy may be generated through the normal driving state.

The method of driving the fuel cell system 100 according to the present exemplary embodiment can reduce the catalyst by decreasing the supply of oxidizer, or it is possible to easily remove impurities by increasing the supply of oxidizer. Therefore, the deterioration of the fuel cell stack is prevented, and the life-span thereof is improved.

For this, the fuel cell system 100 includes the controller 70. The controller 70 is connected to the fuel supply unit 10, the oxidizer supply unit 50, the oxidizer control valve, and the load 60.

The controller 70 controls the constituent elements of the fuel cell system to sequentially perform supplying a small amount of the oxidizer to the fuel cell stack 20 by decreasing the supply of the oxidizer to the fuel cell stack 20, supplying an excessive amount of the oxidizer to the fuel cell stack 20, which is more than an normal amount of the oxidizer in an normal driving state, and supplying the normal amount of oxidizer to the fuel cell stack.

Also, the controller 70 controls an amount and a time of decreasing the oxidizer and an amount and a time of excessively increasing the oxidizer in order to reduce the catalyst in the fuel cell stack and remove internal reactants.

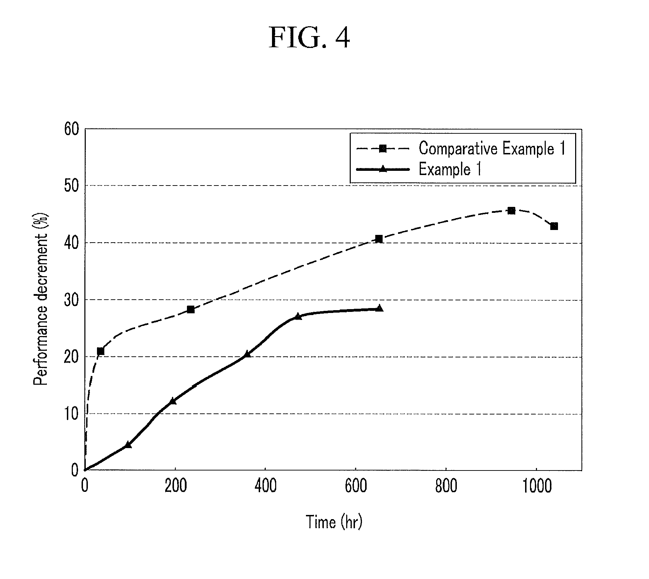

FIG. 4 is a graph comparing performance of a method of driving a fuel cell system according to Example 1 of the present invention with that of a driving method of Comparative Example 1. As shown in FIG. 4, the graph clearly shows that the performance decrement is significantly decreased compared with Comparative Example 1 because the method of driving the fuel cell system according to Example 1 prevents the deterioration of the fuel cell stack.

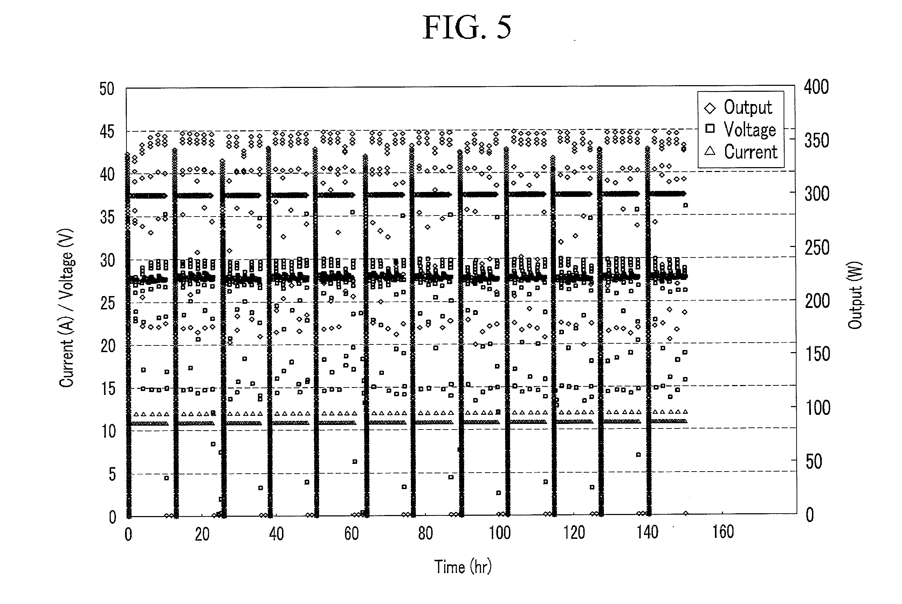

FIG. 5 is a graph showing the life-span of a fuel cell stack according to a method of driving a fuel cell system according to an exemplary embodiment of the present invention.

The life-span was analyzed after driving the fuel cell stack for a total of 200 hours in a manner of 10 hours of driving and 2 hours of rest. As shown in FIG. 5, the performance was not deteriorated even though the fuel cell stack was driven for longer than 100 hours.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A method of operating a fuel cell stack, comprising:
supplying a first amount of oxidizer to the fuel cell stack while supplying fuel to the fuel cell stack to reduce the voltage of the fuel cell stack;
supplying a second amount of oxidizer to the fuel cell stack; and
supplying a third amount of oxidizer to the fuel cell stack, wherein the first amount is less than the third amount and the second amount is greater than the third amount.

2. A method according to claim 1, wherein the third amount is an amount that is supplied in a normal operating state of the fuel cell stack.

3. A method according to claim 1 or 2, wherein supplying the first amount of oxidizer comprises reducing the amount of oxidizer being supplied from the third amount to the first amount.

4. A method according to any one of the preceding claims, wherein the first amount is at least 75% of the third amount.

5. A method according to any one of the preceding claims, wherein the first amount is between 75% and 85% of the third amount.

6. A method according to any one of the preceding claims, wherein the second amount is at least 120% of the third amount.

7. A method according to any one of the preceding claims, wherein the second amount is between 120% and 150% of the third amount.

8. A method according to any one of the preceding claims, comprising supplying the second amount of oxidizer for between 2 and 5 seconds.

9. A method according to any one of the preceding claims, wherein the reduced voltage of the fuel cell stack comprises a voltage that forms a reduction atmosphere at a cathode of the fuel cell stack.

10. A method according to any one of the preceding claims, wherein the reduced voltage is about 0V.

11. A method according to any one of claims 1 to 9, wherein the reduced voltage is in the range of 0V to 0.5V.

12. A fuel cell system (100) comprising:
a fuel cell stack (20); and
a controller (70) for controlling the fuel cell system, wherein the controller is arranged to supply a first amount of oxidizer to the fuel cell stack to reduce the voltage of the fuel cell stack, to subsequently increase an amount of oxidizer being supplied to the fuel cell stack to a second amount of oxidizer and then to reduce the amount of oxidizer being supplied to the fuel cell stack to a third amount of oxidizer.

13. A fuel cell system according to claim 12, wherein the third amount is an amount that is supplied in a normal operating state of the fuel cell stack.

14. A fuel cell system according to claim 12 or 13, comprising an oxidizer control means (13) to control the supply of oxidizer to the fuel cell stack.

15. A fuel cell system according to any one of claims 12 to 14, wherein the system is connected to a load (60) that consumes the electrical energy generated by the fuel cell stack, wherein the controller (70) is connected to the load for controlling the voltage of the fuel cell stack.
